Europäisches Patentamt

**(19)** European Patent Office

Office européen des brevets

**(11)** Numéro de publication: **0 109 878**
**A1**

**(12)** DEMANDE DE BREVET EUROPEEN

**(21)** Numéro de dépôt: **83402097.6**

**(22)** Date de dépôt: **27.10.83**

**(51)** Int. Cl.³: **B 65 D 5/56**
**B 65 D 81/38**

---

**(30)** Priorité: **10.11.82 FR 8218845**

**(43)** Date de publication de la demande:
**30.05.84 Bulletin 84/22**

**(84)** Etats contractants désignés:
**AT BE CH DE GB IT LI LU NL SE**

**(71)** Demandeur: **TEISSEIRE FRANCE (S.A.)**
**15 rue Général Rambaud**
**F-38028 Grenoble Cedex(FR)**

**(71)** Demandeur: **"Lauragri S.A." Société anonyme dite:**
**Route Nationale 7**
**F-13550 Noves(FR)**

**(72)** Inventeur: **Philippot, Etienne**
**Chemin de Poulatière**
**F-38330 Saint Ismier(FR)**

**(72)** Inventeur: **Gras, Augustin**
**La Bégude de Rochefort**
**F-30650 Rochefort du Gard(FR)**

**(74)** Mandataire: **Bugnon-Hays, Claudine et al,**
**PATCO S.A. 5, route Saint Gens B.P. 64**
**F-84200 Carpentras(FR)**

**(54)** Boîte isolante.

**(57)** L'invention concerne un emballage pour produits congelés ou à conserver au froid et plus particulièrement du type comportant une enveloppe extérieure (1) par exemple en carton ou en une matière similaire et une enveloppe intérieure en polystyrène expansé (17) assurant l'isolation thermique du produit emballé, caractérisé en ce que ladite enveloppe intérieure (17) est constituée d'une découpe de polystyrène prédécoupée et prérainée et présente sur au moins l'une de ses faces, un film en une matière plastique (24), ladite découpe (17) étant mise en forme lors de l'emballage du produit à conserver.

Fig.2

## BOITE ISOLANTE

La présente invention concerne un emballage pour produits congelés ou à conserver au froid du type comportant une enveloppe extérieure, par exemple en carton ou en une matière similaire et une enveloppe intérieure en polystyrène expansé assurant l'isolation thermique du produit emballé.

De tels emballages sont connus et l'enveloppe extérieure est normalement réalisée à partir d'une découpe de carton prédécoupée et prérainée et qui peut être stockée et transportée à plat et est uniquement mise en forme lors de son utilisation.

Par contre, l'enveloppe intérieure en polystyrène expansé est toujours formée par une boîte moulée en deux parties car les feuilles de polystyrène expansé ne peuvent pas être pliées sans risquer leur rupture au niveau des lignes de pliage. De telles boîtes en polystyrène expansé sont coûteuses, encombrantes et difficiles à manipuler.

La présente invention a pour objet de concevoir un emballage dudit type permettant de remédier aux dits inconvénients des boîtes en polystyrène expansé moulées utilisées suivant la technique antérieure.

Suivant la présente invention, ladite enveloppe intérieure est constituée d'une découpe de polystyrène prédécoupée et prérainée et présente sur au moins l'une de ses faces, un film en une matière plastique, ladite découpe étant mise en forme lors de l'emballage du produit à conserver.

Grâce à l'invention, l'enveloppe intérieure peut également être stockée et transportée à plat et seulement mise en forme lors de son utilisation. Le film en matière plastique déposé sur au moins l'une des faces de la feuille de polystyrène expansé permet un pliage de cette feuille sans risque de rupture au niveau des amorces ou lignes de pliage.

Ce film plastique est de préférence constitué d'un film de polystyrène biorienté pouvant être scellé par calandrage à chaud sur la feuille de polystyrène expansé.

Suivant un mode de réalisation préféré de l'invention, ledit film est déposé sur la face intérieure de ladite découpe en polystyrène expansé et est revêtu d'une couche d'aluminium. On obtient ainsi une augmentation sensible de l'effet d'isolation thermique de l'enveloppe intérieure de l'emballage selon l'invention.

Avantageusement, ladite découpe présente une épaisseur d'environ 3 à 5 mm tandis que l'épaisseur dudit film est d'environ 30 $\mu$ et ladite

- 2 -

couche d'aluminium présente une épaisseur d'environ 25 Å.

Un tel mode de réalisation a permis d'obtenir des résultats particulièrement satisfaisants en ce qui concerne la fabrication, le rainurage et le pliage de l'enveloppe intérieure de l'emballage selon l'invention.

Mais l'épaisseur de la découpe en polystyrène expansé selon l'invention peut pour certaines applications être plus importante. Dans ce cas, les rainurages de cette découpe sont réalisés au moyen d'un outillage convenable particulier.

Pour le scellage du film plastique et de la couche d'aluminium de la découpe en polystyrène expansé, on utilise de préférence le procédé décrit dans la demande de brevet.

De préférence, ladite enveloppe extérieure est constituée d'une découpe de carton prédécoupée et prérainée, la découpe de carton et la découpe de polystyrène étant mises en forme simultanément lors de l'emballage du produit à conserver.

On obtient ainsi un emballage dont les deux enveloppes sont constituées par des découpes prérainées pouvant être stockées et transportées à plat et qui sont mises en forme par simple pliage au moment de leur utilisation. Ceci permet une automatisation des opérations de mise en forme des enveloppes et de l'emballage du produit à conserver.

D'autres réalisations et avantages de l'invention ressortiront de la description qui va suivre en se référant aux dessins annexés montrant, à titre d'exemple, un mode de réalisation préféré de l'emballage selon l'invention.

Sur ces dessins :

La figure 1 est une vue en plan d'une découpe en carton destinée à former l'enveloppe extérieure d'un emballage parallélépipédique selon l'invention.

La figure 3 est une vue en plan d'une découpe en polystyrène expansé destinée à former l'enveloppe intérieure de l'emballage selon l'invention et,

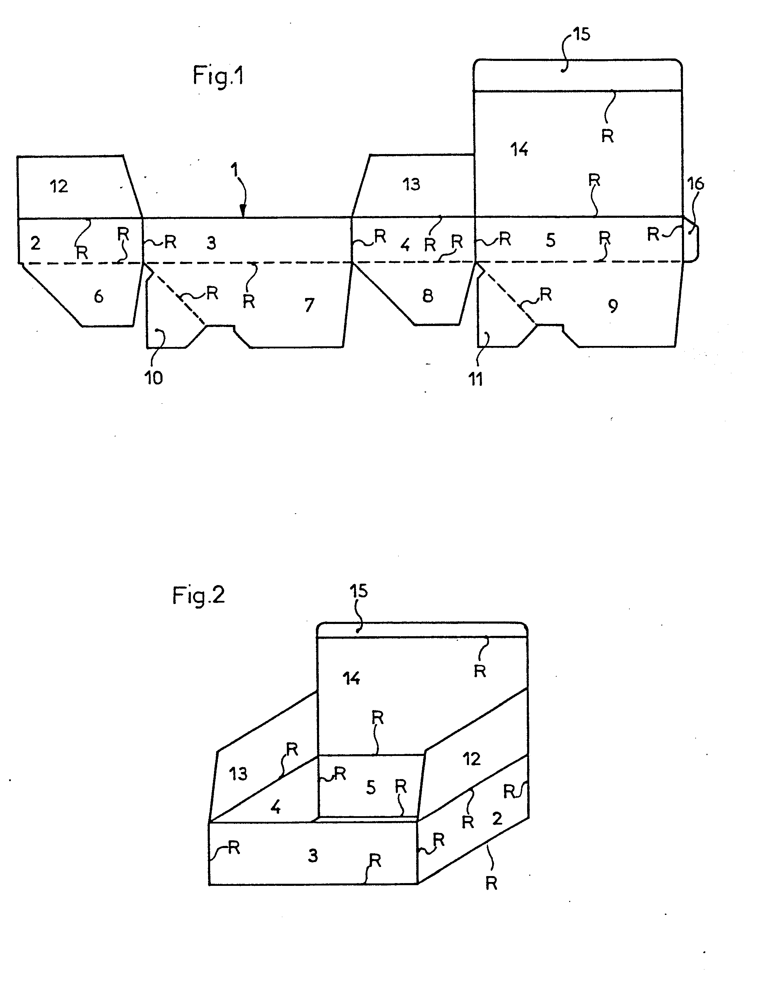

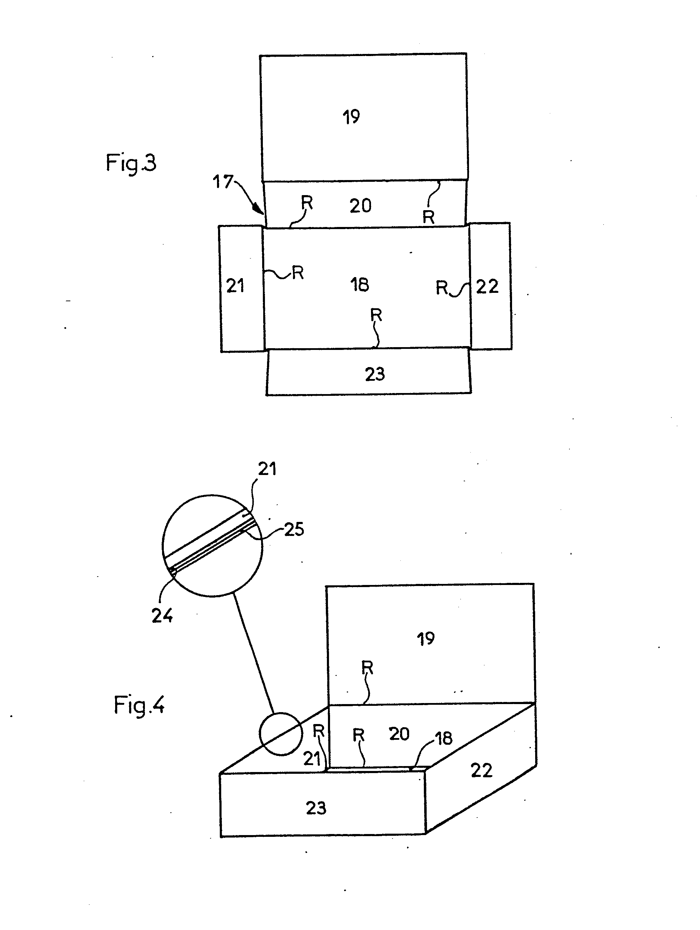

Les figures 2 et 4 sont des vues en perspective schématique montrant les découpes représentées aux figures 1 et 3 après leur mise en forme lors de l'emballage d'un produit à conserver.

La découpe en carton 1 représentée à la figure 1, comprend une partie centrale divisée par des rainurages ou amorces de pliage R en quatre parties 2, 3, 4 et 5 destinées à former les parois latérales de l'enveloppe ou de la boîte extérieure de l'emballage selon l'invention. Les parties 2, 3, 4 et 5 présentent à leur extrémité inférieure des pattes 6, 7, 8 et 9 formant respectivement, d'une manière connue, le fond de l'enveloppe extérieure. Les pattes 7 et 9 comprennent des parties 10 et 11 constituant des pattes de collage du fond de l'enveloppe et de la boîte extérieure. Sur les bords supérieurs des parties centrales 2 et 4, sont prévues des pattes 12 et 13 qui servent de rabats latéraux. La partie 5 comprend une partie supérieure 14 constituant le couvercle de l'enveloppe 1 qui est munie d'une patte de fermeture 15. Enfin, la partie 5 présente à son extrémité latérale extérieure, une patte de collage 16.

La découpe 1 présente entre les différentes parties et pattes, des rainurages ou amorces de pliage R de sorte qu'elle puisse être mise en forme par simple pliage pour former l'enveloppe et la boîte extérieure parallélépipédique telle que représentée à la figure 2. L'opération de mise en forme de la découpe 1 est connue en soi et n'est pour cette raison pas décrite en détail ici.

D'une manière générale, la découpe 1 est livrée à l'utilisateur à plat et mise en forme par des moyens automatiques lors de l'emballage du produit auquel elle est destinée.

A la figure 3, est représentée une découpe 17 destinée à former l'enveloppe intérieure de l'emballage selon l'invention. Cette découpe 17 présente deux parties 18, 19 formant respectivement le fond et le couvercle de l'enveloppe intérieure. Elle comprend de plus quatre parties 20, 21, 22 et 23 destinées à constituer les parois latérales verticales de l'enveloppe intérieure comme représentée à la figure 4. Entre les différentes parties 18 à 23 sont prévues des amorces de pliage R de sorte que la découpe 17 peut être mise en forme par simple pliage pour former l'enveloppe intérieure telle que représentée à la figure 4.

Selon l'invention, la découpe 17 est réalisée à partie d'une feuille de polystyrène expansé présentant sur au moins l'une de ses faces, un film en une matière plastique comme représenté schématiquement en 24 à la figure 4 uniquement pour la paroi latérale 21. Les amorces de pliage R de la découpe 17 sont réalisées par simple refoulage et grâce au film plastique 24, la découpe 17 peut être pliée pour sa mise en forme sans risquer la rupture de la feuille de polystyrène expansé aux niveaux des amorces de pliage.

Le film 24 est de préférence un film de polystyrène biorienté déposé sur la feuille de polystyrène expansé par calandrage à chaud.

Suivant un mode de réalisation particulièrement avantageux de l'invention, la découpe 17 présente sur les deux faces de la feuille de polystyrène expansé un film de polystyrène biorienté. On évite ainsi tout risque de rupture de la feuille de polystyrène expansé même lors de son pliage ou mise en forme par des moyens automatiques soumettant la découpe 17 à des efforts mécaniques relativement importants.

De plus, pour augmenter l'effet d'isolation thermique de la feuille de polystyrène expansé formant la découpe 17 de l'enveloppe intérieure, on peut prévoir sur la face intérieure de la découpe 17, un revêtement métallique constitué de préférence d'une couche d'aluminium comme représentée schématiquement en 25 à la figure 4 pour la paroi 21. Cette couche d'aluminium 25 peut être déposée d'une manière connue par pulvérisation sur la feuille de polystyrène expansé ou sur le film plastique 24. Elle peut également être déposée préalablement sur le film plastique 24 et scellée avec celui-ci par calandrage à chaud sur la face intérieure de la feuille de polystyrène expansé formant la découpe 17.

Dans ce cas, des expériences pratiques ont montré qu'on obtient des résultats particulièrement avantageux en utilisant une feuille de polystyrène expansé d'une épaisseur d'environ 3 à 5 mm munie d'un film de polystyrène biorienté 24, d'une épaisseur d'environ 30 $\mu$ et qui est revêtu d'une couche d'aluminium 25 d'une épaisseur d'environ 25 Å.

Grâce à la structure décrite ci-dessus, les enveloppes extérieures et intérieures de l'emballage selon l'invention peuvent être stockées et transportées à plat sous forme des deux découpes 1 et 17 prédécoupées et prérainées. C'est seulement lors de l'utilisation de l'emballage que l'on met en forme d'abord l'enveloppe extérieure par pliage de la découpe 1 et collage des pattes 10, 11 et 16 de celle-ci. Ensuite, la découpe 17 est mise en forme par simple pliage et disposée à l'intérieur de l'enveloppe 1 pour former l'enveloppe intérieure de l'emballage. Le produit à conserver est disposé dans l'enveloppe intérieure 17 soit au moment de la mise en forme de celle-ci, soit après la mise en place de l'enveloppe 17 dans l'enveloppe extérieure en carton 1.

Pour obtenir une fermeture hermétique de l'enveloppe intérieure et ainsi un effet d'isolation thermique convenable, le couvercle 19 de la découpe 17 présente des dimensions légèrement supérieures à celles du fond 18 de sorte qu'il recouvre parfaitement les bords supérieurs des parois verticales 21 à 23 lors de la mise en forme de l'enveloppe intérieure. Pour la même raison, les bords libres du couvercle 19 et des parois 20 à 23 peuvent être découpés en biseaux pour assurer une fermeture hermétique de l'enveloppe intérieure lorsqu'elle est mise en place dans l'enveloppe extérieure de l'emballage selon l'invention.

Bien entendu, l'invention n'est pas limitée au mode de réalisation décrit et représenté ici, mais on peut y apporter de nombreuses modifications sans pour cela sortir du cadre de l'invention.

La configuration géométrique de l'emballage selon l'invention et par là la forme et le rainurage des découpes 1 et 17 peuvent être quelconques en fonction des produits à conserver, sous réserve que les découpes 1 et 17 soient du type pouvant être mises en forme par pliage le long d'amorces de pliage réalisées préalablement sur les deux découpes par rainurage ou refoulage respectivement.

REVENDICATIONS

1. Emballage pour produits congelés ou à conserver au froid du type comportant une enveloppe extérieure (1) par exemple en carton ou en une matière similaire et une enveloppe intérieure en polystyrène expansé (17) assurant l'isolation thermique du produit emballé, caractérisé en ce que ladite enveloppe intérieure (17) est constituée d'une découpe de polystyrène prédécoupée et prérainée et présente sur au moins l'une de ses faces, un film en une matière plastique (24), ladite découpe (17) étant mise en forme lors de l'emballage du produit à conserver.

2. Emballage suivant la revendication 1, caractérisé en ce que ledit film (24) est un film de polystyrène biorienté.

3. Emballage suivant l'une quelconque des revendications 1 ou 2, caractérisé en ce que ledit film (24) est déposé sur la face intérieure de ladite découpe en polystyrène expansé (17) et est revêtu d'une couche d'aluminium (25).

4. Emballage suivant l'une quelconque des revendications 1 et 2, caractérisé en ce que ladite découpe (17) présente une épaisseur d'environ 3 à 5 mm tandis que l'épaisseur dudit film (24) est d'environ 30 $\mu$.

5. Emballage suivant les revendications 3 et 4 caractérisé en ce que ladite couche d'aluminium (25) présente une épaisseur d'environ 25 Å.

6. Emballage suivant l'une quelconque des revendications 1 à 5, caractérisé en ce que ladite enveloppe extérieure est constituée d'une découpe de carton (1) prédécoupée et prérainée, la découpe de carton (1) et la découpe de polystyrène (17) étant mises en forme simultanément lors de l'emballage du produit à conserver.

# PL1/2

Fig.1

Fig.2

# PL 2/2

Fig.3

19

17

R    20    R

21    R    18    R    22

R

23

21

25

24

Fig.4

19

R

R    R    20    18

21

22

23

Office européen
des brevets

**RAPPORT DE RECHERCHE EUROPEENNE**

EP 83 40 2097

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. 3) |
|---|---|---|---|
| X | US-A-3 980 005 (BUONAIUTO) * colonne 1, lignes 27-29; colonne 1, ligne 57 à colonne 2, ligne 24; colonne 2, lignes 33-45; colonne 2, ligne 57 - colonne 3, ligne 2; colonne 3, lignes 33-49; figures 1-3,6 * | 1,6 | B 65 D 5/56 B 65 D 81/38 |
| Y | | 2,3,4 | |
| Y | FR-A-2 192 026 (SOC. PARISIENNE D'IMPRESSION & DE CARTONNAGE) * en entier * | 2,3,4 | |
| Y | GB-A-1 583 324 (MacPHERSON INTERNATIONAL COATINGS LTD.) * page 1, lignes 48-66; page 2, lignes 5-36; page 3, lignes 47-64; figures 1-3 * | 3 | |
| X | BE-A- 730 410 (LO-DENSE FIXINGS) * page 2, ligne 15 à page 4, ligne 4; page 4, ligne 21 à page 5, ligne 8; figures * | 1,6 | DOMAINES TECHNIQUES RECHERCHES (Int. Cl. 3) B 65 D |
| X | FR-A-1 206 461 (CAPRON) * en entier * | 1,6 | |
| A | GB-A-1 568 294 (D.R. WATERMAN) * en entier * | 1,2,3 | |
| | --- -/- | | |

Le présent rapport de recherche a été établi pour toutes les revendications

| Lieu de la recherche LA HAYE | Date d'achèvement de la recherche 16-02-1984 | Examinateur MARTENS L.G.R. |
|---|---|---|

# 0109878

**RAPPORT DE RECHERCHE EUROPEENNE**

Office européen
des brevets

EP 83 40 2097

| DOCUMENTS CONSIDERES COMME PERTINENTS | | | Page 2 |
|---|---|---|---|
| Catégorie | Citation du document avec indication, en cas de besoin, des parties pertinentes | Revendication concernée | CLASSEMENT DE LA DEMANDE (Int. Cl. 3) |
| A | DE-A-2 853 235 (SCHÖLLER) | | |
| | ----- | | |
| | | | **DOMAINES TECHNIQUES RECHERCHES (Int. Cl. 3)** |
| | Le présent rapport de recherche a été établi pour toutes les revendications | | |

| Lieu de la recherche | Date d'achèvement de la recherche | Examinateur |
|---|---|---|
| LA HAYE | 16-02-1984 | MARTENS L.G.R. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503. 03.82